# EUROPEAN PATENT SPECIFICATION

(11) **EP 2 983 257 B1**
(45) Date of publication and mention of the grant of the patent: **04.10.2017**
(21) Application number: 14002717.8
(22) Date of filing: 04.08.2014
(51) Int. Cl.: H02B 1/20, H01R 4/38, H01R 4/60, H02B 1/21

(54) **Switchgear conductor arrangement and switchgear**
Schaltanlagenleiteranordnung und Schaltanlage
Agencement de conducteur d'appareillage de commutation et ledit appareillage

(43) Date of publication of application: 10.02.2016
(73) Proprietor: ABB Schweiz AG, 5400 Baden (CH)
(72) Inventor: Kraft, Klaus, 69123 Heidelberg (DE); Merkel, Hans-Peter, 69198 Schriesheim (DE)
(74) Representative: Marks, Frank

(56) References cited:
- DE-B- 2 019 096
- JP-A- H03 195 315
- US-A- 2 022 870
- US-A1- 2006 121 796
- US-A1- 2006 209 499

## Description

The invention relates to a switchgear conductor arrangement comprising a conductor connection device for electrically connecting a feeder and/or a busbar to at least one conductor of a switchgear, in particular a low voltage switchgear. Furthermore, a switchgear comprising at least one of said switchgear conductor arrangement.

US 2 022 870 A shows a connector that consists of two clamp portions adapted to embrace a bus conductor. JP H03 195315 A shows ends of conductor pipes connected by a pipe clamp. DE 2 019 096 B also shows a clamp for conductors.

In a common electrical power or power distribution system at least one switchgear is provided typically comprising and/or providing at least one of electrical switches, fuses or circuit breakers, which are used to control, protect, isolate and energize or de-energize various electrical equipment.
In the low voltage range switchgears are used for voltages up to 1 kV and for currents up to several thousand amperes, in particular 6300A.

A switchgear or a switchgear assembly always requires an incoming feeder and in many cases also big outgoing feeders to distribute energy to other parts of the respective installation. These feeders are connected on one side (upper or lower) terminal by flat individual bended copper connection sets to the main busbar system of the switchgear. A second connection set is used on the other side of the feeder to connect cables or bus ducts. The connection set are different, based on the rated current and of the feeder frame size. Furthermore, the connection blocks on the feeders are different for all frame sizes.

Furthermore also the performance of the feeder is dependent on the IP class of the switchgear and ambient temperature of the switchgear location. In most cases a derating factor to the feeder nominal current needs to be applied.

In many cases even a bigger feeder need to be selected, which results in more amount of material more difficult handling and/or processing as well as higher costs and increased foot print.

A bus bar in general is built as a flat strip or a bar of copper or aluminium, which has typically no function or minor function as a structural member. The maximum amount of current that can be safely carried by a bus bar is determined by its cross-sectional size.

Depending on the respective application and/or size of the switchgear as well as the individual setup and customer needs, for each switchgear the respective bus bars have to be pre-processed and mounted or installed individually.

Advantageously flat strips are simple in assembling and or handling but after preprocessing in the field no short time change of the setup is possible anymore.
Furthermore, the flat strip shape allows heat to dissipate due to their surface area but according to the tight packing of the bus bars, in particular several layers, within the switchgear cabinet depending on the applied current the temperature within the cabinet may reach a critical value, so that the current has to be reduced and/or further cooling means have to be applied to the switchgear to avoid damage of the electric devices inside the switchgear.

Bus bars are connected to feeders by conductors, wherein the conductors are typically the hot spot in today's switchgear design. Common conductors are generally built as flat bars which are cooled by thermal conduction. When the conductor is rated with current, it heats up due to its electrical resistance. The heat which is generated by the conductor is mainly led away by the structure of the switchgear, which then dissipates the thermal energy by thermal radiation to the environment.

The feeders and/or bus bars are connected to conductors by flat individual bended copper connection sets. Similar connections are used to connect cables or bus ducts. The connection sets have sizes, based on the rated current and depending on the feeder frame size.

Disadvantageously the flat bar design requires a lot of mechanical work in bending and connecting. This results in very long manufacturing and assembling times. Furthermore, the big variation of connection blocks requires different sizes of connection sets, which have to be pre-processed and may not be changed spontaneously on-site in the field. Therefore, the flat bar design of the state of the art is very burdensome and/or inflexible in handling, assembling and manufacturing. Accordingly, it is the objective of this invention to provide a conductor solution for a switchgear, providing a more flexible design and simplifying the connection of feeders and/or bus bars to conductors of an electrical switchgears.

This objective is accomplished by a switchgear conductor arrangement according to the features of claim 1. Further developments and embodiments of said arrangement as well as a switchgear assembly comprising at least one of said arrangement are disclosed in further claims and the following description.

The switchgear conductor arrangement according to the inventions is defined by the features of claim 1. In a further embodiment a clamp-connector is a connector or connection device, which may fix the hollow cylinder conductor, in particular in the switchgear, and/or may be arranged at the hollow cylinder conductor by a clamping-mechanism.

In a further embodiment the clamping force of the clamping-mechanism can be provided and/or applied by a mounting ring, which can be clamped together by any kind of external clamping force, in particular by means of screws. According to the invention the clamp connector is built as a ring clamp connector, in particular to connect a feeder to the main bus bar and/or the hollow cylinder conductor of a switchgear, in particular a low voltage switchgear, and/or to transformers or other consumers, in particular by the use of or by means of cable or bus duct connections.

In a further refinement the clamp connector is built as a ring clamp connector, which may be used as connection block from the hollow cylinder conductor and/or conductor tube to the main busbar system.

Furthermore, the clamp connector and/or connection block may be connected to the fixed part of a withdrawable feeder.

Moreover, also the cable connection angles may be connected to the same ring clamp connector. As the hollow cylinder conductor may be connected by a clamp-connector to the feeder and/or the busbar, a more convenient connection of the feeder and/or the busbar is provided. Further advantageously, the manufacturing and assembly time is decreased.

An object of the clamp connector and/or clamp-connection is, to ensure a tight clamping of the conductor, which prevents the conductor form escaping and/or moving.

Therefore, the clamp connector provides preferably an enclosing contact on all sides of the conductor. The clamp-connection provides a mechanical attachment, which ensures a safe mechanical and electrical connection of the respective conductor to the busbar and/or to the feeder.

The advantages of this device and their embodiments are discussed in the preceding claims.

The clamp connector is a ring clamp connector comprising at least one shell or ringlike flange with an opening or gap, which is foreseen to enclose the at least one conductor. The ring clamp connector is advantageously suitable for clamping the respective hollow cylinder conductor by a friction connection as it fully encloses the cross-section of the conductor.

The at least one hollow cylinder conductor is at least approximately a tubular-conductor.

Advantageously, the dimension of the outside diameter of the hollow cylinder conductor, in particular of the tubular conductor, and the inside diameter of the clamp connector and/or in particular the ring clamp connector and/or the ringlike flange of the clamp connector are adapted or adjusted on each other and/or are almost the same and/or in particular independent from the rated current of the feeder.

Furthermore, to adjust the hollow cylinder connector and/or tubular conductor to the required rated current, the wall thickness and/or the inner diameter of the tubular-conductor has to be adjusted.

In a further refinement, only the wall thickness of the tubular conductors is adapted, wherein the size and the diameter of the ring clamp connector remains the same, independent of the rated current.

In a further embodiment a combination of round tubes as conductors to connect the feeder to the main bus bar and ring clamp connectors to connect the feeder to the conductor is provided, wherein the same ring clamp connector is used as connection block to the main bus bar system.

In another refinement the outer dimensions of the conductor tubes and the ring clamps are always the same, independent from the rated current of the feeder, wherein depending on the required rated current the wall thickness of the tube can be adjusted and/or multiple tubes may be connected in parallel.

In a further advantageous variant, multiple tubular conductors can be connected in parallel and/or the clamp connector may be freely positioned along the conductor, in particular in various heights and or angles. Therefore, the diversity and the amount of conductor connectors may be decreased significantly.

Further advantageously, the hollow cylinder conductor, in particular the tubular conductor is stiff and accordingly can be inserted more convenient in the ring clamp connector.

In a further embodiment the inner diameter of the ring clamp connection is advantageously designed, so that the tubular conductor can be inserted conveniently by tension-free fit. After inserting the tubular conductor in the ring clamp connection, the ring-clamp-connection is tightened so that the tubular conductor is fixed. Advantageously, the same ring clamp connector is used as a connection to the main bus bar system.

In a further embodiment the hollow cylinder conductor may comprise an oval cross-section, or even a rectangular cross-section. In conclusion, the cross-section of the conductor connector is adapted to the form of the respective conductor. According to the invention, the at least one hollow cylinder conductor and/or tubular conductor has a modular set-up, comprising at least two prefabricated conductor segments.

In a further refinement conductor segments may be prefabricated in different length, thus by combining two or more of said segments the length of the hollow cylinder conductor may be adjusted according to the respective needs.

Furthermore, also at least one electrically insulating conductor segment is provided and/or arranged between two electrically conductive conductor segments, thus two electrically conductive conductor segments, in particular made of copper and/or aluminium, are insulated from each other.

Advantageously, the insulating segment is made at least one of glass, porcelain or composite polymer materials. Porcelain insulators have a dielectric strength of about 4-10 kV/mm.

In a further refinement two segments are connected to each other by a screwed-connection or screw-coupling.

Furthermore, a first end area of segment comprises an internal screw thread with an inside diameter larger than the inside diameter of the mid area of the segment and wherein a second area of the segment comprises an external screw thread with an outside diameter smaller than the outside diameter of the mid area of the segment.

Moreover, the internal and the external screw thread are adjusted and/or adopted to each other.

Accordingly, in one embodiment one segment can be screwed in to another segment.

Further advantageously, polymer composite materials are used as insulation means. The polymer composite materials are exemplary composed of a central rod made of fibre reinforced plastic and an outer weathershed made of silicone rubber or ethylene propylene diene monomer rubber (EPDM). This polymer composite material is advantageously lighter in weight and has good hydrophobic capabilities; hence these materials are very suitable for the use in switchgear devices.

According to another exemplary embodiment of the invention, the at least one shell comprises a first half-shell and a second half-shell, wherein the half-shells are foreseen to enclose the at least one conductor. As the shell is separated in two half-shells, the installation and the clamping of the shells is simplified significantly as the shell does not need to be unbent any more. Advantageously, the conductor is inserted in the first or inner half-shell and the second or outer half-shell is connected to the first shell. The first half-shell and the second half-shell can be connected by any kind of tightening mechanism.

According to a further preferred embodiment, the second half-shell is connected by at least one detachable connection to the first half shell. Advantageously, sufficient space is reached to insert the conductor conveniently in the inner half-shell, by connecting the outer half shell to the inner half shell by a detachable connection. After inserting the conductor in the inner half shell, the outer half shell is attached and the detachable connection tightens the outer half-shell to the inner half shell.

In a further embodiment the at least one clamp connector comprises a T-like mounting unit bonded and/or connected to the first half shell, in particular they a built in one piece. Furthermore, the T-like mounting unit comprises holes for the feed through or passage of screws.

In one further advantageously embodiment of the invention, the detachable connection between the two half shells is at least one screw-connection. As the detachable connection comprises at least one screw connection for tightening the conductor, the pretension can be advantageously adjusted.

In a further advantageous embodiment, the first half shell is hooked in the second half shell on one side, and on the other side the shells are tightened by the respective screw connection.

In a further refinement, the clamp connector is connected by at least one crosspiece to the conductor connection-mean. Advantageously, enough space is reached between the feeder connection-mean and the conductor-connection-mean by connecting both connection means via a crosspiece. The space between the two connection-means is advantageously required for attaching the feeder connection mean to the feeder and/or to the bus bar.

Further advantageously, the feeder-connection-mean is rotatable connected to the conductor-connection-mean. Therefore, the conductor can be inserted in the conductor connection-mean in a convenient position. After the insertion, the feeder-connection-mean can be turned in the most suitable position. Therefore, the installation of the conductor in the switchgear is advantageously simplified.

In a further advantageously embodiment, the feeder-connection-mean comprises a cable-connection-mean for holding at least one cable. The cable-connection-mean is advantageously a bent angle, exemplary a 90° degree angle , a 180° degree angle or even a U-shaped angle, in which one or several cables can be inserted conveniently without exercising any pressure on the cables. Further advantageously, the cables are protected from bending and therefore form external breakage and severe damage.

Furthermore the object is solved by a switchgear, in particular a low voltage switchgear, comprising at least one switchgear conductor arrangement, in particular per phase, as described above and/or according to the invention.

These features and further advantageous embodiments are contained in the claims and shall be illustrated by means of exemplary in the figures contained in the drawing attached to this specification. The attached drawing show in
- Fig. 1:: a top view on a first exemplary switchgear comprising three switchgear-clamp connectors,
- Fig. 2:: a first exemplary switchgear clamp connector with one exemplary shell,
- Fig. 3:: a second exemplary switchgear clamp connector with two half-shells which are tightened by bolted connections,
- Fig. 4:: a third exemplary switchgear clamp connector with an exemplary cable-connection-means,
- Fig. 5: a side cut view of a second exemplary switchgear with tubular conductors,
- Fig. 6: a front view of a third exemplary switchgear with tubular conductors, whereas switchgears of Fig. 5 and Fig. 6 are not according to the invention,
- Fig. 7: a tubular-conductor which is divided in two tubular conductor segments and
- Fig. 8: a side cut-view of a fourth exemplary switchgear with two tubular conductor-segments.

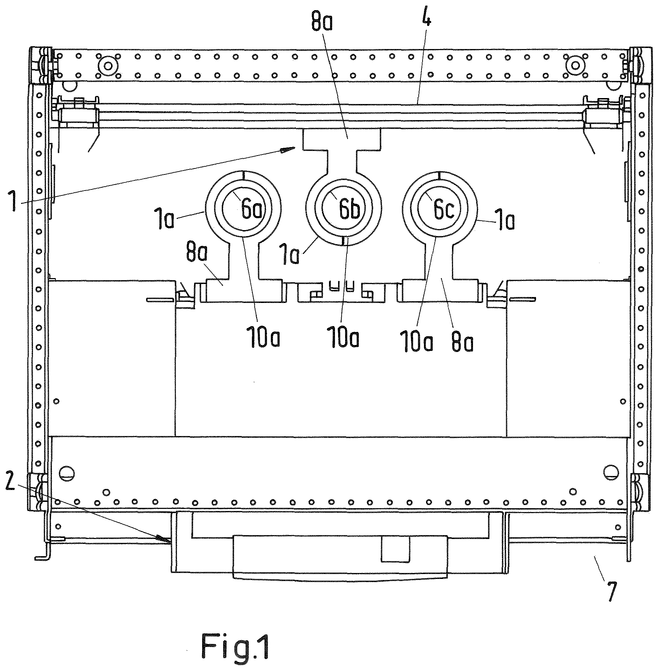

Fig. 1 shows a top view of a first exemplary switchgear 7 comprising three switchgear clamp connectors 1a. The switchgear clamp connector 1a on the right side and the switchgear clamp connector 1a on the left side are connected to a feeder 2, wherein the switchgear clamp connector 1a in the middle is connected to a busbar 4.

Three conductors 6a, 6b, 6a are further depicted, which are enclosed by the respective conductor-connection-mean 10a, wherein the connection to the feeder 2 and/or to the busbar 4 is set-up by a respective feeder-connection-mean 8a. The respective feeder-connection-mean can be exemplary attached to the feeder 2 and/or to the busbar 4 by a bolted connection, by a clamping connection or by a welded connection.

The conductor connector 10a in this example is a ring clamp connector, which encloses the respective conductor 6a, 6b, 6c.

In a further, not depicted, embodiment the conductor connector 10a can consist of a steel band into which a screw thread has been cut or pressed. One end of the band can contain a captive screw, wherein the clamp is put around the conductor which has to be connected. The loose end is fed into a narrow space between the band and the captive screw. When the screw is turned, it acts as a worm drive pulling the threads of the band, causing the band to tighten around the conductor, or when screwed the opposite direction, to loosen. Therefore, the invention depicts ring clamp connector to connect the feeder 2 to the main bus bar 4 of a low voltage switchgear 7 and to transformers or other consumers by the use of cable or bus duct connections.

Switchgears 7 for low voltages may be entirely enclosed within a building. Switchgears are often mounted outdoors and insulated by air, although this requires a large amount of space. The conductors 6a, 6b, 6c and the respective switchgear connection-devices 1a can be used for high-voltage switchgears, with voltages up to 1,100 kV.

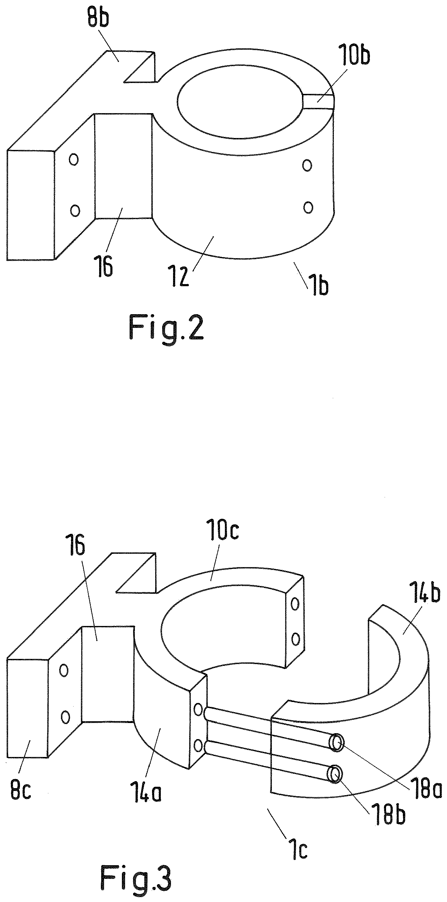

Fig. 2: shows a first exemplary switchgear clamp connector 1 b with a shell 12. The shell 12 is connected by a crosspiece 16 with a feeder-connection-mean 8b. The feeder-connection-mean 8b is typically connected by bolted connections with a feeder and/or a bus bar. By connecting the shell 12 by the crosspiece 16 with the feeder-connection-mean 8b, sufficient space is advantageously achieved for inserting the bolts in the respective holes conveniently. The bolts are foreseen to be inserted in the two coexisting holes, which are indicated. In a further step, the shell 12 is put under pretension by tightening the inserted bolts. Not depicted in the figure is, that the shell can be put under pretension by a ratchet spanner or even by a click connection.

A further variant is, that the clamp-connection can be also provided as a spring-clamp-connection, which is typically made from a strip of spring steel. The spring steel is cut, so that one side has a narrow protrusion centered on the end, and the other side has a pair of narrow protrusions on either side. The ends of these protrusions are then bent outwards, and the strip rolled to form a ring, with the protruding tabs intermeshing.

To use the spring clamp connection, the exposed tabs are pressed towards each other, exemplary by using pliers. The pliers are used for increasing the diameter of the ring, and the conductor is slid into the spring-clamp-connection, past the portion that will go onto a barb. Advantageously spring-clamp-connections are particularly suited for confined spaces, where other clips require tightening tools applied from narrow and therefore inaccessible angles.

Fig. 3 shows a second exemplary switchgear clamp connector 1c with two half shells 14a, 14b, which form a conductor connection means 10c. The two half shells 14a, 14b are connected by bolt connections 18a, 18b. Due to the use of the bolt connections 18a, 18b, the second half-shell 14b can be fully removed, which enables a simpler and easier insertion of the respective conductor. Advantageously, the first half-shell provides holes with inserted threads. Hence, the bolts can be tightened without requiring any nuts. Therefore, the bolts can be tightened in a simple manner, without any need for inconveniently holding nuts.

In a further, not depicted variant, the conductor-connection-mean 10c can consist of a steel band into which a screw thread pattern has been cut or pressed. One end of the band contains a captive screw. The clamp is put around the conductor to be connected with the loose end being fed into a narrow space between the band and the captive screw. When the screw is turned, it acts as a worm drive pulling the threads of the band. This causes the band to tighten around the conductor, or when screwed in the opposite direction, to loosen the band.

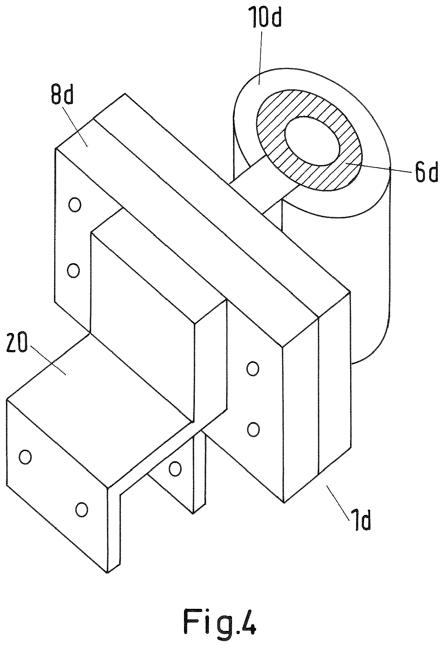

Fig. 4 shows a third exemplary switchgear clamp connector 1d with a feeder-connection means 8d, a conductor connection means 10d and an exemplary cable connection means 20. Furthermore, the figure depicts a conductor 6d which is inserted in the conductor connection means 10d, wherein the cable connection means 20 is attached at the opposite side of the feeder connection means 8d. Not depicted in the figure is, that the cable connection means 20 can be attached on the same side of the conductor connection means 10d. In this figure, the cable connection means 20 is an U-shaped angle, in which multiple cables can be easily inserted without pressure. Therefore, the inserted cables are protected from external damage. Not depicted in the figure is, that the cable connection means 20 can be designed as a 90° degree angle, a U-shape or any other kind of shape in which cables can be inserted. The cables are exemplary fixed by at least one cable tie.

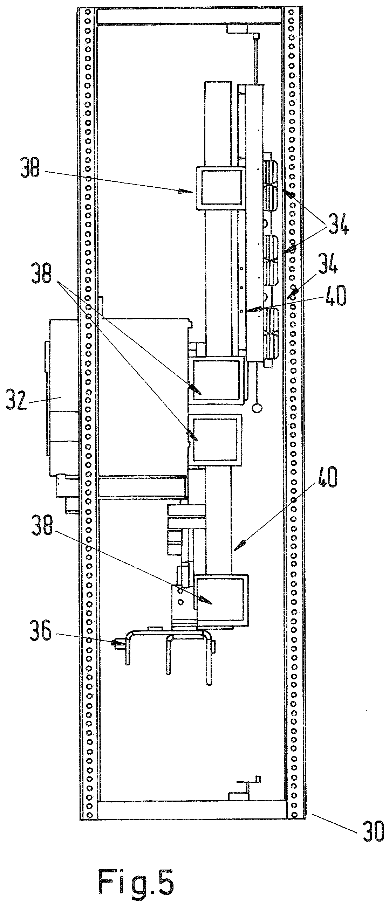

Fig. 5 depicts a side cut view of a second exemplary switchgear 30 with two tubular conductors 40, wherein the two tubular conductors 40 are separated from each other by an air gap in between. One of the tubular conductors 40 is connected to a feeder 32, wherein the second tubular conductor 40 is connected to a bus bar 34 by a respective ring clamp connector 38. The ring clamp connector 38 is connected to the bus bar 34, to the feeder 32 and/or to the further feeder 36. The tubular conductors 40, which are exemplary round hollow bars are inserted in the respective ring clamp connector 38, wherein the tubular-conductors are tensioned with the ring clamps, so that the tubular conductors are fixed.

The switchgear 30 has exemplary a section height of 2200mm, wherein the section depth can be in the range between 600 and 1200mm lengths.

Hence, the figure depicts the combination of round tubes as conductors to connect the feeder to the main bus bar and ring clamp connectors to connect the feeder to the conductor. The same ring clamp connector is used as connection block to the main bus bar system. The outer dimensions of the conductor tubes and the ring clamps are always the same, independent from the rated current of the feeder. Dependent on the required rated current the wall thickness of the tube can be adjusted. Furthermore multiple tubes can be connected in parallel.

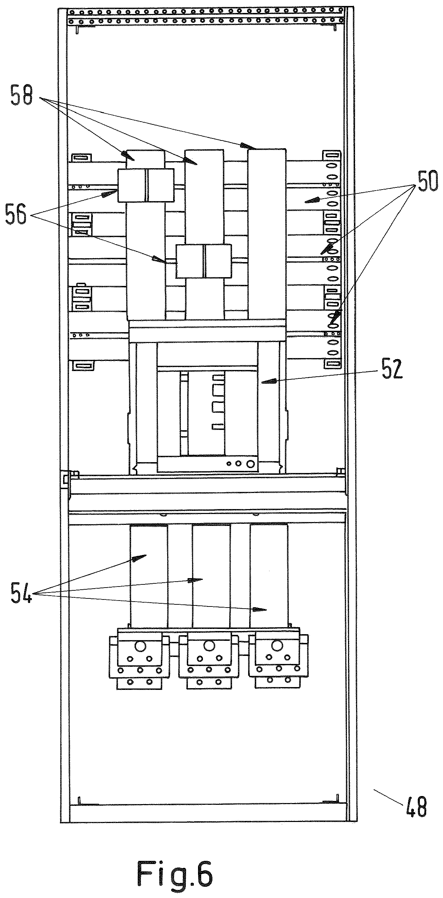

Fig. 6 shows a front view of a third exemplary switchgear 48 with tubular conductors 54, 58. The upper tubular conductors 58 are connected to the main bus bar system 50 by respective ring clamp connectors 56. Therefore, the ring clamp connectors 56 shows ring clamp connections blocks which are connected to the bus bar system. In this figure, the lower tubular-conductors 54 are exemplary connected to cable connection sets.

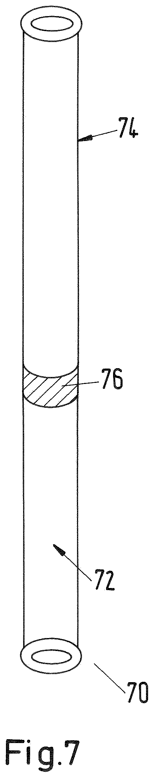

Fig. 7 shows a tubular-conductor 70 which is divided in two tubular conductor sections or segments 72, 74. The tubular conductor 70 is divided by an insulation-mean 76, so that the first tubular conductor segment 72 and the second tubular conductor segment 74 are electrically isolated from each other. The insulation means has exemplary a resistance between 10¹⁰ and 10¹⁴ Ωm. Exemplary, the respective tubular conductor section or segment are made of copper tubes with an integrated insulation composite which acts as electrical insulation clearance. The insulation means 76 might be arranged in the middle of the tubular conductor 70, or the insulation means 76 can be arranged eccentrically in the tubular conductor 70, so that the respective tubular conductor sections or segments 72 and 74 are different in lengths.

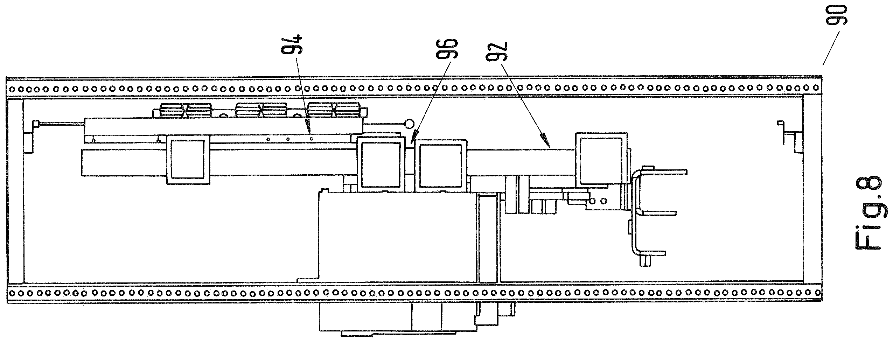

Fig. 8 shows a side cut-view of a fourth exemplary switchgear 90 with two tubular conductor-sections 92 and 94. The two tubular conductor sections or segments are separated by a tubular insulation segment or section 96, which separates the upper and the lower connection and/or connector of the feeder. Therefore, only one straight conductor bar can be inserted to connect different voltage planes. As shown in this figure, one tubular conductor can be advantageously used to connect a feeder one side of the main bus bar, wherein the cables or bus ducts are connected on the other side. Therefore, the assembly of the switchgear is significantly simplified, as only one conductor has to be inserted in the respective ring-clamp-connection.

### List of reference signs

- 1a: First switchgear connection-device
- 1b: Second switchgear connection-device
- 1c: Third switchgear connection-device
- 1d: Fourth switchgear connection-device

- 2: First feeder
- 4: First bus bar

- 6a: First conductor
- 6b: Second conductor
- 6c: Third conductor
- 6d: Fourth conductor

- 7: First Switchgear

- 8a: First feeder-connection-mean
- 8b: Second feeder-connection-mean
- 8c: Third feeder-connection-mean
- 8d: Fourth feeder-connection-mean

- 10a: First conductor-connection-mean
- 10b: Second conductor-connection-mean
- 10c: Third conductor-connection-mean
- 10d: Fourth conductor-connection-mean

- 12: Shell

- 14a: First half-shell
- 14b: Second half-shell
- 16: Crosspiece

- 18a: First bolt-connection
- 18b: Second bolt-connection

- 20: Cable connection-mean

- 30: Second switchgear
- 32: Second feeder
- 34: Second bus bar
- 36: First ring-clamp-connection
- 38: Ring-clamp-connection
- 40: First tubular conductor

- 45: Third tubular conductor section
- 46: Fourth tubular conductor section
- 47: Tubular insulation mean

- 48: Third switchgear
- 50: Third bus bar
- 52: Third Feeder
- 54: Second tubular conductor
- 56: Second ring-clamp-connection
- 58: Third tubular conductor

- 70: Fourth tubular conductor
- 72: First tubular conductor-section
- 74: Second tubular conductor section
- 76: First tubular insulation-mean

- 90: Fourth switchgear
- 92: Third tubular conductor-section
- 94: Fourth tubular conductor-section
- 96: Second tubular insulation-mean

## Claims

1. Switchgear conductor arrangement for a switchgear, in particular a low voltage switchgear, comprising
▪ at least one conductor built as a hollow cylinder, in particular a tubular conductor with a circular cross section; and
▪ at least one clamp connector (1a, 1b, 1c, 1d)
wherein the clamp connector is a ring-clamp-connector (38, 56) comprising at least one shell (12) or ringlike flange with an opening or gap, which is foreseen to enclose the at least one conductor (6a, 6b, 6c, 6d) and
wherein the at least one conductor (6a, 6b, 6c, 6d) is at least approximately a tubular-conductor (54, 58, 70),
**characterized in that** the at least one tubular-conductor (54, 58, 70) comprises at least two tubular conductor-sections (54, 58, 72, 74, 92, 94), which are insulated from each other by at least one insulation-mean (76, 96).

2. Switchgear conductor arrangement according to claim 1, **characterized in that** for electrically connecting a feeder (2, 32, 52) and/or a bus bar (4, 50, 52) to the at least one conductor (6a, 6b, 6c, 6d) the clamp connector comprises:
▪ a feeder-connection-mean (8a, 8b, 8c, 8d) for connecting the feeder (2, 32, 52) and/or the bus bar (4, 50, 52);
▪ at least one conductor-connection-mean (10a, 10b, 10c, 10d), which is connected to the feeder-connection-mean (8a, 8b, 8c, 8d), for connecting the at least one conductor (6a, 6b, 6c, 6d); wherein
▪ the conductor-connection-mean (10a) comprises at least one clamp-connection for connecting the at least one conductor (6a, 6b, 6c, 6d).

3. Switchgear conductor arrangement according to one of claims 1 or 2, **characterized in that** the at least one shell (12) comprises a first half-shell (14a) and a second half shell (14b), wherein the half shells (14a, 14b) are foreseen to enclose the at least one conductor (6a, 6b, 6c, 6d).

4. Switchgear conductor arrangement according to claim 3, **characterized in that** the second half-shell (14b) is connected by at least one detachable connection to the first half shell (14a).

5. Switchgear conductor arrangement according to claim 4, **characterized in that** the detachable connection is at least one screw connection (18a, 18b).

6. Switchgear conductor arrangement according to one of the preceding claims, **characterized in that** the feeder-connection means (8a, 8b, 8c, 8d) is connected by at least one crosspiece (16) to the conductor-connection-mean (10a, 10b, 10c, 10d).

7. Switchgear conductor arrangement according to one of the preceding claims, **characterized in that** the feeder connection means (8a, 8b, 8c, 8d) is rotatable connected to the conductor connection means (10a, 10b, 10c, 10d).

8. Switchgear conductor arrangement according to one of the preceding claims, **characterized in that** the feeder-connection means (8a, 8b, 8c, 8d) comprises a cable-connection-mean (20) for holding at least one cable.

9. Switchgear (7, 30, 48), in particular a low voltage switchgear, comprising at least one switchgear conductor arrangement according to one of the preceding claims.

10. Switchgear according to claim 9, **characterized in that** at least one switchgear conductor arrangement according to one of the claims 1 to 8 per phase is provided.

## Patentansprüche

1. Schaltanlagen-Leiteranordnung für eine Schaltanlage, insbesondere eine Niederspannungsschaltanlage, umfassend
▪ wenigstens einen Leiter, der als Hohlzylinder gebaut ist, insbesondere einen rohrförmigen Leiter mit einem kreisförmigen Querschnitt; und
▪ wenigstens einen Klemmverbinder,(1a, 1b, 1c, 1d),
wobei der Klemmverbinder ein Ringklemmverbinder (36, 56) ist, der wenigstens eine Hülse (12) oder einen ringförmigen Flansch mit einer Öffnung oder einem Spalt umfasst, die/der vorgesehen ist, um den wenigstens einen Leiter (6a, 6b, 6c, 6d) zu umschließen und
wobei der wenigstens eine Leiter (6a, 6b, 6c, 6d) wenigstens ungefähr ein rohrförmiger Leiter (54, 58, 70) ist,
**dadurch gekennzeichnet, dass** der wenigstens eine rohrförmige Leiter (54, 58, 70) wenigstens zwei rohrförmige Leiterabschnitte (54, 58, 72, 74, 92, 94) umfasst, die durch wenigstens ein Isoliermittel (76, 96) gegeneinander isoliert sind.

2. Schaltanlagen-Leiteranordnung nach Anspruch 1, **dadurch gekennzeichnet, dass** zum elektrischen Verbinden eines Abzweigs (2, 32, 52) und/oder einer Stromschiene (4, 50, 52) mit dem wenigstens einen Leiter (6a, 6b, 6c, 6d) der Klemmverbinder Folgendes umfasst:
▪ ein Abzweigverbindungsmittel (8a, 8b, 8c, 8d) zum Verbinden des Abzweigs (2, 32, 52) und/oder der Stromschiene (4, 50, 52);
▪ wenigstens ein Leiterverbindungsmittel (10a, 10b, 10c, 10d), das mit dem Abzweigverbindungsmittel (8a, 8b, 8c, 8d) verbunden ist, zum Verbinden des wenigstens einen Leiters (6a, 6b, 6c, 6d); wobei
▪ das Leiterverbindungsmittel (10a) wenigstens eine Klemmverbindung zum Verbinden des wenigstens einen Leiters (6a, 6b, 6c, 6d) umfasst.

3. Schaltanlagen-Leiteranordnung nach einem der Ansprüche 1 oder 2, **dadurch gekennzeichnet, dass** die wenigstens eine Hülse (12) eine erste Halbhülse (14a) und eine zweite Halbhülse (14b) umfasst, wobei die Halbhülsen (14a, 14b) vorgesehen sind, um den wenigstens einen Leiter (6a, 6b, 6c, 6d) zu umschließen.

4. Schaltanlagen-Leiteranordnung nach Anspruch 3, **dadurch gekennzeichnet, dass** die zweite Halbhülse (14b) durch wenigstens eine lösbare Verbindung mit der ersten Halbhülse (14a) verbunden ist.

5. Schaltanlagen-Leiteranordnung nach Anspruch 4, **dadurch gekennzeichnet, dass** die lösbare Verbindung wenigstens eine Schraubverbindung (18a, 18b) ist.

6. Schaltanlagen-Leiteranordnung nach einem der vorhergehenden Ansprüche, **dadurch gekennzeichnet, dass** das Abzweigverbindungsmittel (8a, 8b, 8c, 8d) durch wenigstens ein Querstück (16) mit dem Leiterverbindungsmittel (10a, 10b, 10c, 10d) verbunden ist.

7. Schaltanlagen-Leiteranordnung nach einem der vorhergehenden Ansprüche, **dadurch gekennzeichnet, dass** das Abzweigverbindungsmittel (8a, 8b, 8c, 8d) mit dem Leiterverbindungsmittel (10a, 10b, 10c, 10d) drehbar verbunden ist.

8. Schaltanlagen-Leiteranordnung nach einem der vorhergehenden Ansprüche, **dadurch gekennzeichnet, dass** das Abzweigverbindungsmittel (8a, 8b, 8c, 8d) ein Kabelverbindungsmittel (20) zum Halten wenigstens eines Kabels umfasst.

9. Schaltanlage (7, 30, 48), insbesondere eine Niederspannungsschaltanlage, umfassend wenigstens eine Schaltanlagen-Leiteranordnung nach einem der vorhergehenden Ansprüche.

10. Schaltanlage nach Anspruch 9, **dadurch gekennzeichnet, dass** wenigstens eine Schaltanlagen-Leiteranordnung nach einem der Ansprüche 1 bis 8 pro Phase vorgesehen ist.

## Revendications

1. Agencement de conducteurs d'appareillage de commutation pour un appareillage de commutation, en particulier un appareillage de commutation basse tension, comprenant
▪ au moins un conducteur construit comme un cylindre creux, en particulier un conducteur tubulaire avec une section transversale circulaire ; et
▪ au moins un connecteur serre-fil (1a, 1b, 1c, 1d),
le connecteur serre-fil étant un connecteur à bague de serrage (38, 56) comprenant au moins une coque (12) ou une bride en forme de bague avec une ouverture ou un espace qui est prévu pour enfermer l'au moins un conducteur (6a, 6b, 6c, 6d) et
l'au moins un conducteur (6a, 6b, 6c, 6d) étant au moins approximativement un conducteur tubulaire (54, 58, 70),
**caractérisé en ce que** l'au moins un conducteur tubulaire (54, 58, 70) comprend au moins deux sections de conducteur tubulaire (54, 58, 72, 74, 92, 94), qui sont isolées l'une de l'autre par au moins un moyen d'isolation (76, 96).

2. Agencement de conducteurs d'appareillage de commutation selon la revendication 1, **caractérisé en ce que** pour raccorder électriquement une ligne d'alimentation (2, 32, 52) et/ou une barre omnibus (4, 50, 52) à l'au moins un conducteur (6a, 6b, 6c, 6d), le connecteur serre-fil comprend :
▪ un moyen de raccordement de ligne d'alimentation (8a, 8b, 8c, 8d) pour raccorder la ligne d'alimentation (2, 32, 52) et/ou la barre omnibus (4, 50, 52) ;
▪ au moins un moyen de raccordement de conducteur (10a, 10b, 10c, 10d), qui est raccordé au moyen de raccordement de ligne d'alimentation (8a, 8b, 8c, 8d), pour raccorder l'au moins un conducteur (6a, 6b, 6c, 6d) ; dans lequel
▪ le moyen de raccordement de conducteur (10a) comprend au moins un raccord serre-fil pour raccorder l'au moins un conducteur (6a, 6b, 6c, 6d) .

3. Agencement de conducteurs d'appareillage de commutation selon une des revendications 1 ou 2, **caractérisé en ce que** l'au moins une coque (12) comprend une première demi-coque (14a) et une deuxième demi-coque (14b), les demi-coques (14a, 14b) étant prévues pour enfermer l'au moins un conducteur (6a, 6b, 6c, 6d).

4. Agencement de conducteurs d'appareillage de commutation selon la revendication 3, **caractérisé en ce que** la deuxième demi-coque (14b) est raccordée par au moins un raccord détachable à la première demi-coque (14a) .

5. Agencement de conducteurs d'appareillage de commutation selon la revendication 4, **caractérisé en ce que** le raccord détachable est au moins un raccord vissé (18a, 18b).

6. Agencement de conducteurs d'appareillage de commutation selon une des revendications précédentes, **caractérisé en ce que** le moyen de raccordement de ligne d'alimentation (8a, 8b, 8c, 8d) est raccordé par au moins une entretoise (16) au moyen de raccordement de conducteur (10a, 10b, 10c, 10d).

7. Agencement de conducteurs d'appareillage de commutation selon une des revendications précédentes, **caractérisé en ce que** le moyen de raccordement de ligne d'alimentation (8a, 8b, 8c, 8d) est raccordé avec faculté de rotation au moyen de raccordement de conducteur (10a, 10b, 10c, 10d).

8. Agencement de conducteurs d'appareillage de commutation selon une des revendications précédentes, **caractérisé en ce que** le moyen de raccordement de ligne d'alimentation (8a, 8b, 8c, 8d) comprend un moyen de raccordement de câble (20) pour maintenir au moins un câble.

9. Appareillage de commutation (7, 30, 48), en particulier un appareillage de commutation basse tension, comprenant au moins un agencement de conducteurs d'appareillage de commutation selon une des revendications précédentes.

10. Appareillage de commutation selon la revendication 9, **caractérisé en ce qu'**au moins un agencement de conducteurs d'appareillage de commutation selon une des revendications 1 à 8 est prévu par phase.
